(19) **Europäisches Patentamt European Patent Office Office européen des brevets**

(11) **EP 3 641 040 B1**

(12) **EUROPEAN PATENT SPECIFICATION**

(45) Date of publication and mention
of the grant of the patent:
**04.06.2025 Bulletin 2025/23**

(21) Application number: **18290120.7**

(22) Date of filing: **16.10.2018**

(51) International Patent Classification (IPC):
**H01M 8/18** $^{(2006.01)}$

(52) Cooperative Patent Classification (CPC):
**H01M 8/18;** Y02E 60/50

(54) **DICHROMATE / ZINK REDOX FLOW BATTERIES**

DICHROMAT/ZINK-REDOX-FLUSSBATTERIEN

BATTERIES À FLUX REDOX DICHROMATE/ZINC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.04.2020 Bulletin 2020/17**

(73) Proprietor: **BROTHER GROUP (HONG KONG) LIMITED**
**HONG KONG (CN)**

(72) Inventors:
• **Finkelstein, David Alan**
  **38000 Grenoble (FR)**

• **Bonin, Pierre**
  **26210 Lapeyrouse Mornay (FR)**
• **Chatenet, Marian**
  **38250 Meylan (FR)**

(74) Representative: **Dr. Gassner & Partner mbB**
**Wetterkreuz 3**
**91058 Erlangen (DE)**

(56) References cited:
**US-A1- 2004 202 925    US-A1- 2006 063 065**
**US-A1- 2015 372 350**

**Description**

**BACKGROUND OF THE INVENTION**

FIELD OF THE INVENTION

The invention describes novel redox flow battery systems, which are electrochemical cells used for electricity storage.

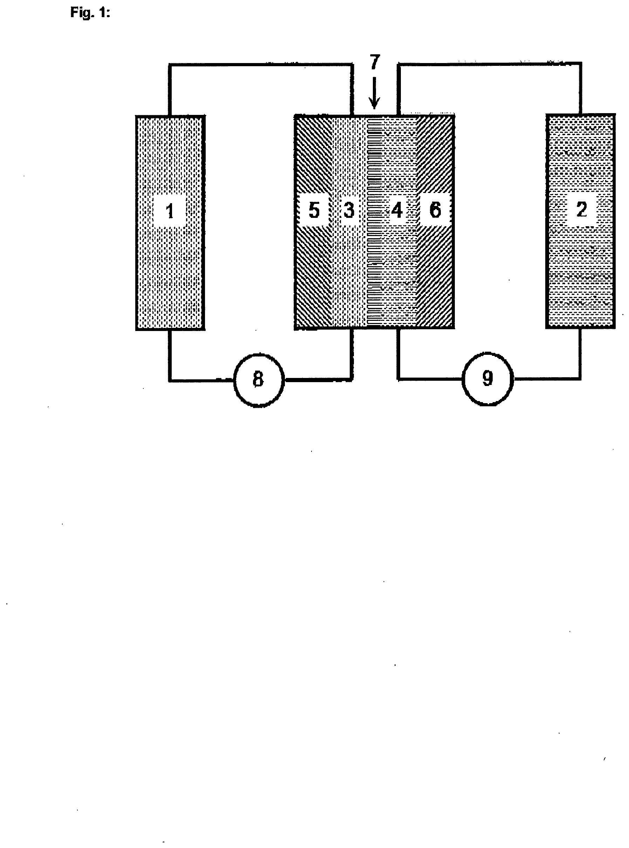

Redox flow batteries (RFB) are secondary (rechargeable) fuel cells and battery-fuel cell hybrids (Fig.1). Unlike traditional batteries, RFBs decouple system energy and power, and so like a fuel cell have a total system energy that scales with the size of electroactive material storage tanks and a system power that scales with the size of the electrochemical reactor. This trait makes them ideal for storing large amounts of electricity at low cost, since additional electroactive material is usually far less expensive than a larger reactor. For this reason, RFBs are currently used and being further developed as massive, grid-level electricity storage devices. This is especially valuable for intermittent renewable energy sources, which, in order to stabilize their output to current electrical grids, require a source of backup electricity when the given resources (wind, solar) become temporarily unavailable.

Many RFB chemistries have been developed, yet they universally use oxidants that undergo 1 or 2 $e^-$ reductions (n = 1 or 2) and/or have low to moderate solubility ($C_{max}$), greatly limiting (1) their volumetric energy densities and (2) their power densities. This applies to $VO^{2+}$, $Ce^{4+}$, $Fe^{3+}$ (1 $e^-$), $Br_2$ (2 $e^-$ and $O_2$ (4 $e^-$), the oxidants in all-vanadium, $Zn/Ce^{4+}$, $Cr^{2+}/Fe^{3+}$, $H_2/Br_2$, and $H_2/O_2$ RFBs, respectively. While $O_2$ and $Br_2$ have high n, their values for $C_{max}$ are much smaller than those for the other species (0.001 and 0.2 M vs. > 1 M). The lower energy and power densities associated with RFBs result in very large battery sizes relative to competing technologies, such as lead-acid and Li-ion batteries. The sheer size of such batteries contributes to unwanted facilities, operational, and materials costs, as well as restrictions an battery siting.

With the aim to provide significantly higher energy and power density WO 2016/202950 developed a cathodic half-cell based on $Cr_2O_7^{2-}$. In order to overcome the problem that $Cr_2O_7^{2-}$'s reduction product, $Cr^{3+}$, cannot be readily oxidized (i.e. recharged) heterogeneously at known electrode catalysts and combined it with an electron mediator capable of homogeneously oxidizing $Ce^{III}$ to $Cr^{VI}$ using an $EC_{cat}$ mechanism in solution.

However, said half-cell's electrolyte contains $Cr_2O_7^{2-}$ as well as highly reactive electron mediator species (such as $Ce^{4+}$) at high concentration in an acidic environment, which causes deleterious interactions with typical counterions and/or electrolyte of the corresponding anodic half-cell comprising the fuel system.

Accordingly, it was the object of the present invention to develop a suitable complementary anodic half-cell to the cathodic half-cell based on $Cr_2O_7^{2-}$ in order to provide a working redox flow battery.

**SUMMARY OF THE INVENTION**

In a first aspect, the present invention provides a rechargeable redox flow battery (RFB) comprising an electrochemical cell comprising at least a positive electrode (cathode) in a positive half-cell and a negative electrode (anode) in a negative half-cell, an ion-conducting membrane between the two half-cells, wherein the membrane is designed for dual acidic anolyte and catholyte or designed for an acidic catholyte and an alkaline anolyte; at least two storage tanks for catholyte and anolyte, optionally one or more pumps to circulate stored catholyte and anolyte through the cathodic and anodic half cells, respectively, and at least one anolyte and at least one catholyte; wherein the anolyte comprises the $Zn^{2+}/Zn^o$ redox couple, at least methane sulfonic acid or its anion as an electrolyte for conductivity and at least one solvent; and the catholyte comprises the $Cr^{III}/Cr^{VI}$ redox couple, at least methane sulfonic acid or its anion one electrolyte for conductivity and the $Ce^{4+}/Ce^{3+}$ redox couple as the electrochemically reversible electron mediator and at least one solvent.

In another aspect, the present invention also relates to the use of the redox flow battery as described herein to store electrical energy for grid-level energy storage, homeowner energy storage, remote locations, firming or load leveling of intermittent renewable electricity generation site, preferably wind and solar farms, micro-hydropower, geothermal energy, tidal power, energy arbitrage, portable and/or personal electronics, electric vehicles such as ships, submarines, planes, unmanned underwater vehicles (UUVs) or unmanned aerial vehicles (UAVs), military electronics equipment, satellites and other manned or unmanned spacecraft, or other applications where rechargeable RFBs can be beneficially employed.

A further aspect of the present invention is a method for storing electrical energy comprising:

   a) charging the RFB according to any one of claims 1 to 9 by supplying a current power source to the positive and negative electrode,
   b) discharging the RFB by connecting the positive and negative electrode to a load.

## BRIEF DESCRIPTION OF THE FIGURES

FIG 1: Schematic illustration of a redox flow battery comprising (1) anolyte storage tank; (2) catholyte storage tank; (3) anolyte chamber; (4) catholyte chamber; (5) anode; (6) cathode; (7) selectively permeable ion-conducting membrane; (8) pump for anolyte; (9) pump for catholyte.

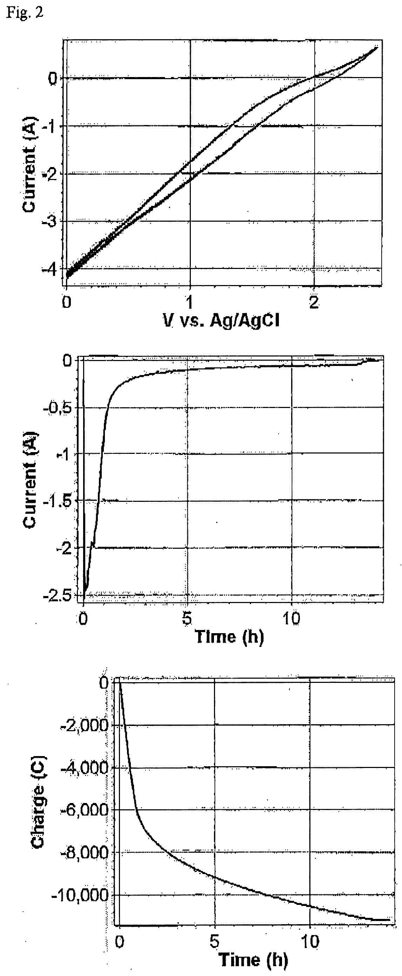

FIG 2: Zn / Cr-Ce Flow Battery Testing

Conditions Oxidant side: 1 M $Na_2Cr_2O_7$, 0.5 M $Ce(CH_3SO_3)_3$, 2 M $CH_3SO_3H$ (50 mL)

Conditions Fuel side: 1 M $Zn^{2+}$, 2.5 M $CH_3SO_3H$ (50 mL)

CV Scan Rate 100 mVls; Chronoamperometry at 0.5 V

FIG 3: Zn-In Half Cell using optimized potential program
*Conditions: 2 M $Zn(CH_3SO_3)_2$, 0.020 M $InCl_3$, 1 M $CH_3SO_3H$*

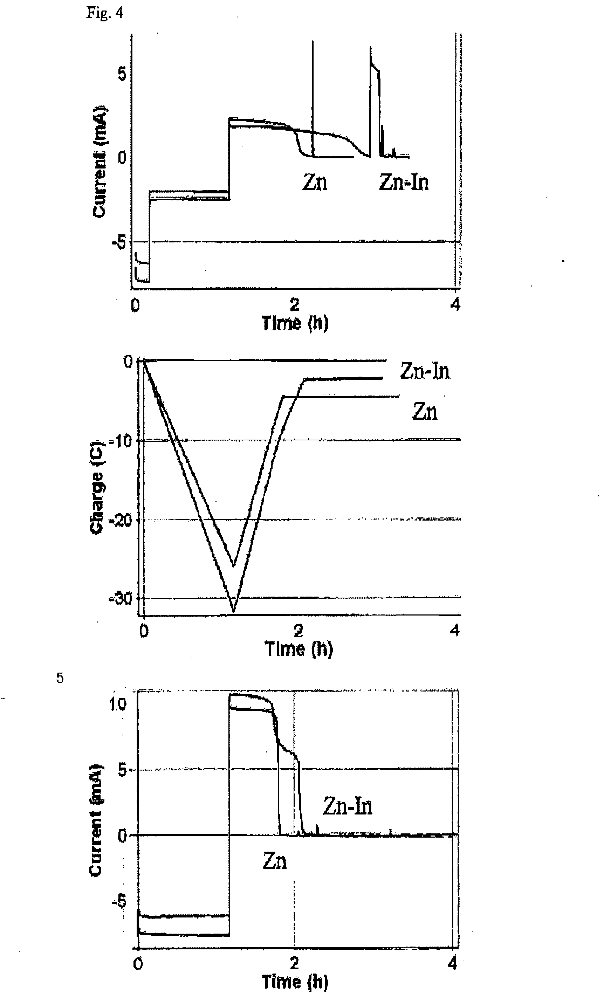

. FIG 4: Zn-In vs Zn Half Cell

Conditions for Zn-In: 2 M $Zn(CH_3SO_3)_2$, 0.020 M $InCl_3$, 1 M $CH_3SO_3H$
Conditions for Zn: 2 M $Zn(CH_3SO_3)_2$, 1 M $CH_3SO_3H$

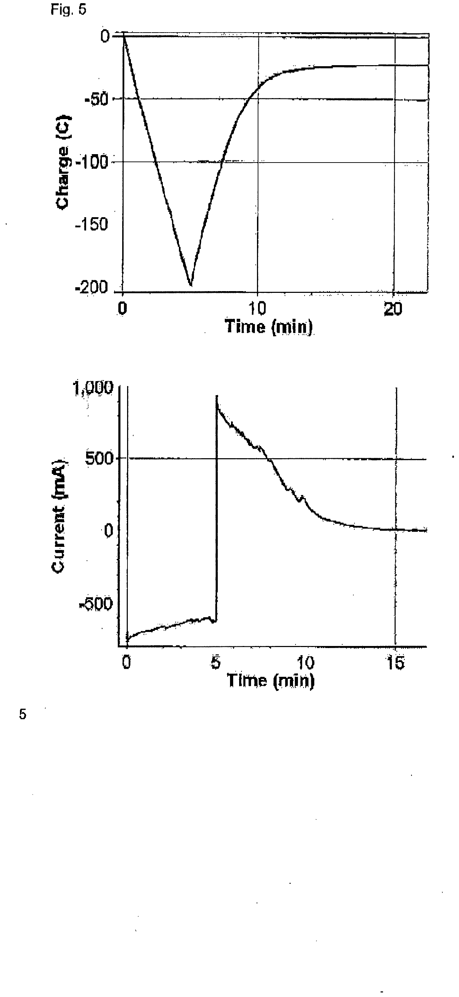

FIG 5: Zn-In Device Testing in a Zn-In / Zn-In Redox Pump
Conditions: 2 M $Zn(CH_3SO_3)_2$, 0.020 M $InCl_3$, 1 M $CH_3SO_3H$

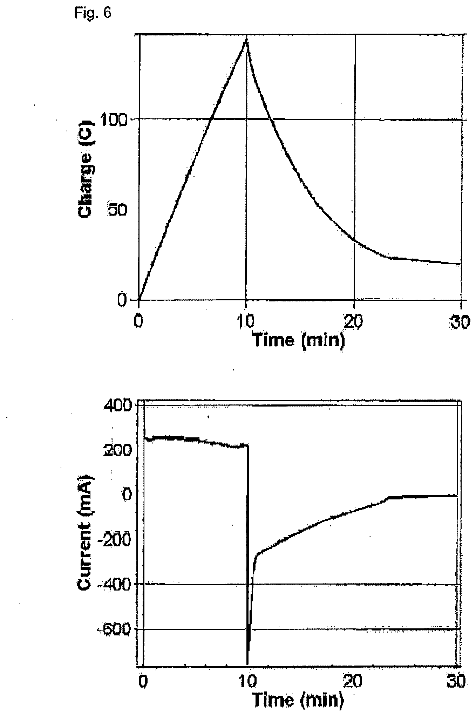

FIG 6: Zn-In / Cr-Ce Redox Flow Battery Testing

Fuel: 2 M $Zn(CH_3SO_3)_2$, 0.020 M $InCl_3$, 1 M $CH_3SO_3H$
Oxidant: 1.33 M $Cr(CH_3SO_3)_3$, 0.5 M $Ce(CH_3SO_3)_3$
Charge 2.7 V, Discharge 0.5 V

## DETAILED DESCRIPTION

An "$EC_{cat}$ mechanism" (also denoted as EC' in Bard and Faulkner in "Electrochemical Methods: Fundamentals and Applications", 2nd Ed. 2001) is described In the following general manner: it consists of an electrochemical step (hereafter E) In which a given species A is converted to species B. This is followed by a subsequent chemical-catalytic step (hereafter Coat) between B and species C, which regenerates species A from B and produces product D from C. The regeneration of A represents a catalytic process that gives an apparent increase in concentration of A near the electrode surface, generating higher than expected electrochemical current for the reduction of A to B:

| | |
|---|---|
| **E:** | A + 1 e⁻ →B |
| $C_{cat}$: | B+ C-> A+ D |

Since regenerated A must remain at the electrode surface to be detected, high currents are detected at (1) shorter time periods between consumption and regeneration of A and (2) decreased flow rates of solution across the electrode, which decrease the time for transport and the rate of transport for A leaving the electrode surface.

The observed "electrochemical potential", or simply "potential" $E$, of a given soluble redox species (e.g., $Ce^{4+}$) participating in a reversible reduction (e.g. $Ce^{4+}$ + 1 e⁻ $\rightleftarrows$ $Ce^{3+}$) is defined by the Nernst equation:

$$E = E^0 + RT/nF \ln(C_{ox}/C_{red})$$

where $C_{ox}$ and $C_{red}$ are the respective concentrations of the oxidized and reduced forms of the given redox species (e.g. $Ce^{4+}$ and $Ce^{3+}$), $n$ is the number of electrons per molecule involved in the conversion of the oxidized to the reduced form of the given redox species, R is the universal gas constant, T is the temperature, and F is Faraday's constant. The term $E^0$ is

the standard potential of the redox species, which is the observed potential (E) when $C_{ox} = C_{red}$. In the context of the invention, the Nernst equation implies that the potential of a given reversible redox species varies from its $E^0$ depending on the ratio of the oxidized to reduced form present In solution. Thus a ratio of $Ce^{4+}$ to $Ce^{3+}$ of 99 to 1 shifts the E of $Ce^{4+}$ positive by 0.120 V, and a ratio of 99.96 to 0.04 shifts E positive by 0.200 V.

A "rotating disk electrode", RDE, is used in RDE voltammetry to achieve laminar flow across an electrode surface. When planar RDEs are used, as in the results presented herein, RDE voltammetry allows direct assessment of a multitude of fundamental parameters of a given fuel or oxidant for use in RFBs. Because RDE voltammetry assesses fundamental parameters, rather than a given fuel cell's or RFB's performance, RDE voltammetry results are universally comparable across all possible systems.

The "mass transport limited current", $i_L$ of an electrochemical reaction in RDE voltammetry is the maximum obtainable current at a given RDE rotation rate. Since the $i_L$ is a function of the steady-state transport that originates from laminar flow across the RDE, the $i_L$ is independent of potential, and appears as a horizontal line in an RDE voltammogram.

The half-wave potential, $E_{1/2}$, of a given electrochemical reaction in RDE voltammetry is the potential at which ½ of the $i_L$ is achieved. A reasonably accurate measurement of $E_{1/2}$ must be performed at fairly low current density; at high current density in analytical glassware, solution resistance distorts the RDE voltammogram with a diagonal line that significantly shifts the $E_{1/2}$. To achieve low current density for a high n oxidant like $Cr_2O_7^{2-}$, low concentration (1 to 10 mM) and low to moderate rotation rate (50 to 3000 rpm) must be used. In the context of the invention, the $E_{1/2}$ is useful as a first-order assessment of the operating potential of a given electrode, and thus the operating voltage of a RFB.

The terms "NHE" and "Ag/AgCl" refer to two standard types of reference electrodes used to measure the E of an electrode, where NHE is the Normal Hydrogen Electrode and Ag/AgCl is the silver / silver chloride electrode, and a given $E_{Ag/AgCl} = E_{NHE} - 0.197$ V. Unless stated otherwise, all unreferenced potentials are shown as V vs. Ag/AgCl, not V vs. NHE.

The term storage tank refers to vessels wherein one or more liquids and/or gases can be stored. The liquids and/or gases may be separated from each other by a baffle or other suitable partition walls.

The terms anolyte and catholyte are familiar to the person skilled in the art of RFBs and are described e.g. In Weber, A.Z., Mench, M.M., Meyers, J.P. et al. J. Appl. Electrochem., 2011, 41, 1137-1164.

In a preferred embodiment, the catholyte of the redox flow battery as described herein is a liquid comprising the $Ce^{4+}/Ce^{3+}$ redox couple as an reversible electron mediator, an electrolyte for conductivity (and pH control) and a solvent

In a preferred embodiment, the anolyte of the redox flow battery as described herein is a liquid comprising a solution of a fuel capable of reversible oxidation; an electrolyte for conductivity (and pH control) and a solvent.

When using a $Zn^{2+}/Zn^0$ fuel system in an anodic half-cell in combination with the cathodic half-cell based on $Cr_2O_7^2$ it was critical to find a suitable electron mediator couple which is capable of oxidizing $Cr^{III}$ to $Cr^{VI}$ and at the same provide a counter-ion which does neither deleterious affect the electron mediator couple nor $Cr^{III}/Cr^{VI}$ or $Zn^{2+}/Zn^0$.

Selecting the $Ce^{4+}/Ce^{3+}$ redox couple as the electron mediator couple provided a challenge to find a suitable counter-ion, as most common counter-ions cannot be used. For example $NO_3^-$ and $ClO_4^-$ are reduced at potentials less negative than $Zn^0$ and prevent $Zn^0$ deposition, $SO_4^{2-}$ already precipitates $Ce^{4+}/Ce^{3+}$ species at low concentration, $Cl^-$, $I^-$, and $Br^-$ are oxidized at potentials less positive than $Ce^{3+}$ and thus consumed before $Ce^{3+}$ oxidation.

The solution to the above problem was to use methane sulfuric acid as an electrolyte in the catholyte and anolyte. The effect will be improved by using the $Zn^{2+}/Zn^0$ redox couple in form of zinc(II) methane sulfonate, the $Cr^{III}/Cr^{VI}$ redox couple in form of chromium(III) methane sulfonate and the $Ce^{4+}/Ce^{3+}$ redox couple in form of cerium(III) methane sulfonate.

Using the $Ce^{4+}/Ce^{3+}$ redox couple in the form of cerium(III) methane sulfonate, means employing partially, mainly or only $Ce(CH_3SO_3)_3$ as the $Ce^{3+}$ species. $Ce(CH_3SO_3)_3$ has a high solubility of >2 M in methane sulfonic acid, $CH_3SO_3H$. This compound can be prepared from the inexpensive precursors cerium carbonate, $Ce_2(CO_3)_2$, and methane sulfonic acid.

Using the $Zn^{2+}$ / $Zn^0$ redox in the form of zinc(II) methane sulfonate means employing is partially, mainly or only $Zn(CH_3SO_3)_2$ as the $Zn^{2+}$ species. This compound can be prepared from ZnO and $CH_3SO_3H$. Since ZnO dissolves very well in acid, only $Zn(CH_3SO_3)_2$ and $CH_3SO_3H$ are left in the final solution. Hence, there is no need to precipitate $Zn(CH_3SO_3)_2$ for using it in the present invention.

Using the $Cr^{VI}/Cr^{3+}$ in the form of chromium(III) methane sulfonate means employing partially, mainly or only $Cr(CH_3SO_3)_3$ as the $Cr^{3+}$ species. This compound can be prepared by dissolving $CrO_3$ in water to form $H_2Cr_2O_7$, subsequently reducing the $Cr^{VI}$ to $Cr^{3+}$ with hydrogen peroxide ($H_2O_2$) followed by addition of methane sulfonic acid.

With respect to the above, "partially" refers to an amount of 20 to 50 mol% of the metal ions, "mainly" to an amount of 55 to 99 mol%, preferably 70 to 90 mol% of the metal ions, and "completely" to more than 99 mol% to 100 mol% of the metal ions.

The rechargeable redox flow battery (RFB) according to the invention typically comprises an electrochemical cell comprising at least a positive electrode in a positive half-cell and a negative electrode in a negative half-cell, an ion-conducting membrane between the two half-cells, wherein the membrane is designed for dual acidic anolyte and catholyte or designed for an acidic catholyte and an alkaline anolyte; at least two storage tanks for catholyte and anolyte, optionally one or more pumps to circulate stored catholyte and anolyte through the cathodic and anodic half cells, respectively, and at least one anolyte and at least one catholyte;

wherein the anolyte comprises the $Zn^{2+}/Zn^0$ redox couple, methane sulfonic acid or its anion and at least one solvent; and
the catholyte comprises the $Cr^{III}/Cr^{VI}$ redox couple, methane sulfonic acid or its anion, the $Ce^{4+}/Ce^{3+}$ redox couple and at least one solvent.

In one embodiment of the invention, the initial battery formulation contains Zn in form of Zn°, e.g. a zinc plate and Cr in form of $Cr_2O_7^{2-}$.

In a preferred embodiment, the initial battery formulation contains Zn in form of a $Zn^{2+}$ and Cr in form of $Cr^{3+}$. This embodiment provides the following advantages:

- The $Zn^0$ (fuel) side of the battery can be constructed / shipped without pre-formed $Zn^0$ deposits. That is, the $Zn^0$ electrode can be built simply from carbon plates and does not need a film of $Zn^0$ pre-deposited. The fuel solution can contain $Zn^{2+}$, which is stable, unlike $Zn^0$, which readily decomposes in water to form $H_2$ gas.
- The entire battery can be constructed / shipped in a discharged state. Both the fuel ($Zn^0$) and the oxidant ($Cr^{VI}$) are in the discharged states of $Zn^{2+}$ and $Cr^{3+}$, making the solution less reactive and less toxic for shipping and on-site construction of large, grid-level batteries.
- The $Cr^{VI}$ (oxidant) side of the battery generates its own acid instead of becoming acid-starved during battery operation. If the battery is started from Zn° and $Cr_2O_7^{2-}$, then 1 M $Cr_2O_7^{2-}$ solution would require 14 M methane sulfonic acid in order to be completely reduced to $Cr^{3+}$. As such high concentration of methane sulfonic acid would limiting the solubility of $Cr^{3+}$ species, and thus decrease the performance of the battery.

This configuration allows for all species to coexist in the solution and yet still produce enough acid to consume all of the $Cr^{VI}$ generated. The preferable molar ratio of $Cr(CH_3SO_3)_3$ to $Ce(CH_3SO_3)_3$ in the anolyte is in the range from 1:1 to 5:1, particularly preferably from 2:1 to 3:1 and most preferably 2,7:1.

In a preferred embodiment, the anolyte contains $In^{3+}$ and/or the anode $In^0$. Thus, the spontaneous oxidation of $Zn^0$ under formation of $H_2$ in aqueous media can be suppressed. Sub-stoichiometric amounts of In with regard to Zn are sufficient, such as less than 50 mol%, preferably less than 15 mol% more preferably less 5 mol% and most preferably 1 mol% and less are sufficient. When Zn and In are co-deposited on the anode, the resulting $Zn_{89}In_1$ alloy has a surface with greatly reduced activity for $H_2$ evolution.

Thus, the molar amount of In with regard to Zn in the anolyte and anode is less than 50 mol%, preferably less than 15 mol% more preferably less than 5 mol% and most preferably not more than 1 mol%

While high current efficiencies for Zn deposition at carbon electrodes can be achieved by high concentrations of $Zn(CH_3SO_3)_2$ in $CH_3SO_3H$ (methane sulfonic acid), Zn showed a current efficiency of 83% for 2 M $Zn(CH_3SO_3)2$ in 1 M $CH_3SO_3H$ only when stripping at very low voltage efficiency in order for Zn stripping to outpace Zn decomposition to $H_2$.

In on the other hand showed 67 to 77% current efficiency for 0.1 M $InCl_3$ in 3 M $CH_3SO_3H$, with significantly lower current efficiencies at longer deposition times. This suggests that In rapidly decomposes to $H_2$ and $In^{3+}$ when left in solution,

However, Zn-In showed up to 100% current efficiency analytically and 70 to 90% current efficiency at the device level. Moreover, Zn and In significantly stabilize one another to suppress oxidation of Zn and/or In under $H_2$ formation. Economically advantageous In ingots can be easily dissolved in $CH_3SO_3H$ as a substitute for expensive $InCl_3$.

Zn-In shows 87% current efficiency at 83% estimated voltage efficiency using the following potential program:

a) a potential of -1.5 (+/- 0.1) V vs. Ag/AgCl is applied for a short period of time (shorter than the following steps b) an c)) to rapidly deposit Zn-In,
b) a potential of -1.1 (+/- 0.1) V is applied to deposit much more Zn-In,
c) a potential of -0.7 (+/- 0.1) V is applied until the oxidation current greatly decreases,
d) a potential of 0 to -0.3 V is applied for a shorter period than steps b) an c) to remove layers of In that protect Zn and prevent it from being stripped at -0.7 V.

In step a), the deposited Zn-In can cover the carbon electrode and block carbon from creating $H_2$ as Zn-In has a higher overpotential for H2 evolution than carbon and the sooner the carbon is covered, the less $H_2$ is generated by passing current through the electrode.

Step b) lasts for a longer period of time (e.g. 1 h). At potential of -1.1 V (+/- 0.1V) more Zn-In is deposited at lower overpotential. Said potential represents only 0.1 V (+/- 0.1V) overpotential for Zn deposition.

Step c) also lasts for a longer period of time (e.g. 1 h). A somewhat high overpotential for stripping (0.3 V) seems advantageous to strip off Zn-In fast enough to limit the competing decomposition to $H_2$.

In Step d), Zn-In is stripped for a short period of time to remove layers of In that protect Zn (and prevent it from being stripped at -0.7 V). Though Zn and In co-deposit at the same potential, In requires higher potentials for stripping than Zn, as seen in the voltammograms according to Figure 4.

A further improvement of charge efficiency can be effected by combining the embodiments according to the invention with a $H_2$ recombinator to ensure that the battery remains balanced during multiple cycles. $H_2$ recombinators are devices known to the person skilled in the art and used e.g. in commercially available Zn-$Br_2$ RFBs.

In the present invention, the solvent(s) for the catholyte and anolyte can be selected from the group consisting of water or a nonaqueous solvent, such as acetonitrile, dimethyl sulfoxide, dimethyl formamide, methanol, ethanol, 1-propanol, isopropanol, diethyl ether, diglyme, tetrahydrofuran, glycerol, and mixtures thereof.

In another aspect, the present invention relates to the use of the redox flow battery as described herein to store electrical energy for grid-level energy storage, homeowner energy storage, remote locations, firming or load leveling of intermittent renewable electricity generation site, preferably wind and solar farms, micro-hydropower, geothermal energy, tidal power, energy arbitrage, portable and/or personal electronics, electric vehicles such as ships, submarines, planes, unmanned underwater vehicles (UUVs) or unmanned aerial vehicles (UAVs), military electronics equipment, satellites and other manned or unmanned spacecraft, or other applications where rechargeable RFBs can be beneficially employed.

Those of skill in the art will realize that many modifications and variations can be employed without departing from the spirit and scope of the invention. The present invention is now further illustrated by reference to the following, non-limiting examples.

## EXAMPLES

### Synthesis of cerium(III) methane sulfonate, Ce(CH₃SO₃)₃

A saturated solution of $Ce_3(CO_3)_2$ was prepared in water, with excess $Ce_3(CO_3)_2$ remaining unsolved on the bottom of the glassware. Pure (15.4 M) $CH_3SO_3H$ was then added to the solution while stirring until some of the $Ce_3(CO_3)_2$ dissolves. At this stage, excess solid $Ce_3(CO_3)_2$ was still present at the bottom of the glassware. The supernatant was then separated from the solid $Ce_3(CO_3)_2$, placed in a watch glass or petri dish and heated in an oven to 120 to 150°C to evaporate the water and excess $CH_3SO_3H$, leaving a precipitate of $Ce(CH_3SO_3)_9$.

### Synthesis of zinc(II) methane sulfonate, Zn(CH₃SO₃)₂

ZnO was dissolved in $CH_3SO_3H$, and the $O^{2-}$ counter-ion is reacted to $H_2O$ in acid, yielding a solution containing only $Zn(CH_3SO_3)_2$ and $CH_3SO_3H$, which could be used without the need to precipitate $Zn(CH_3SO_3)_2$

### Synthesis of chromium(III) methane sulfonate Cr(CH₃SO₃)₃

A saturated solution of $H_2Cr_2O_7$ was prepared by dissolving $CrO_3$ in water, which was then added dropwise to a solution of 50% pure (15.4 M) $CH_3SO_3H$ and 50% of 30%-by-mass (9.8 M) $H_2O_2$ under cooling in a cold-water bath to prevent the solution from boiling. The resulting solution was stirred and additional $H_2O_2$ added dropwise until all of the $Cr^{VI}$ has been reduced to $Cr^{3+}$, which was evident by a change in coloration of the solution. Subsequently, a solution of 2 M $Cr^{3+}$ was prepared by adding $H_2Cr_2O_7$ to $CH_3SO_3H$ in a 1:6 ratio, which corresponds to a 2:6 or 1:3 ratio of $CrO_3$ to $CH_3SO_3H$.

### Synthesis of an anolyte starting material

$Ce(CH_3SO_3)_3$ was added to the solution obtained from the synthesis of chromium(III) methane sulfonate to obtain an anolyte starting material.

### Battery Operation A

The battery was started from $Zn^0$ plate in 50 mL of 2.5 M $CH_3SO_3H$ and 50 mL of 1 M $Cr_2O_7^{2-}$ in 2 M $CH_3SO_3H$, current dropped rapidly while the total acid in both solutions had been consumed. Given that the total system has 0.175 mol $H^+$ and the reaction has a ratio of 14 $H^+$ : 6 $e^-$, there is enough acid to pass 7,240 C of charge. Current dropped rapidly when this charge was passed and $[H^+]$ plummeted during the first 1.5 h. After 7,240 C has passed by t = 1.5 h, the current leveled off as the system became dependent on obtaining $H^+$ from $H_2O$ instead of $CH_3SO_3H$.

$$\text{Reaction:} \quad Cr_2O_7^{2-} + 14\ H^+ + 6\ e^- \rightarrow 2\ Cr^{3+} + 7\ H_2O$$

Reaction including all species in the oxidant-side solution:

$$H_2Cr_2O_7 + 12 \cdot CH_3SO_3H + 0.5\ Ce^{3+} + 1.5\ CH_3SO_3^- + 6\ e^- \rightarrow 2\ Cr^{3+} + 13.5\ CH_3SO_3^- + 0.5\ M\ Ce^{3+} + 7\ H_2O$$

Battery Operation B

The battery was started from $Cr^{3+}$ and $Zn^{2+}$, whereupon significant acid was generated *in-situ* from water on the $Cr^{VI}$ (oxidant) side during $Cr^{VI}$ production. The excess $H^+$ generated will travel to the $Zn^{2+}$ side to help conduct charge through solution and maintain charge balance during the reaction.

Oxidant-Side Reaction (calculated as $\frac{2}{3}$ x the reaction above):

$$1\tfrac{1}{3}\ Cr^{3+} + 4\tfrac{2}{3}\ H_2O \rightarrow \tfrac{2}{3}\ Cr_2O_7^{2-} + 9\tfrac{1}{3}\ H^+ + 4\ e^-$$

Oxidant-side Reaction including All Species in Solution:

$$1\tfrac{1}{3}\ Cr^{3+} + 5.5\ CH_3SO_3^- + 0.5\ M\ Ce^{3+} + 4\tfrac{2}{3}\ H_2O \rightarrow \tfrac{2}{3}\ H_2Cr_2O_7 + 5.5\ CH_3SO_3H + 0.5\ Ce^{3+} + 2.5\ H^+ + 4\ e^-$$

Fuel-Side Reaction (calculated as 2 x the reaction above):

$$2\ Zn^{2+} + 4\ CH_3SO_3^- + 1\ CH_3SO_3H + 4\ e^- \rightarrow 2\ Zn^0 + 4\ CH_3SO_3^- + 1\ CH_3SO_3H$$

**Zn-In Half Cell:**

Voltammetry of 2 M $Zn(CH_3SO_3)_2$, 0.020 M $InCl_3$, 1 M $CH_3SO_3H$:

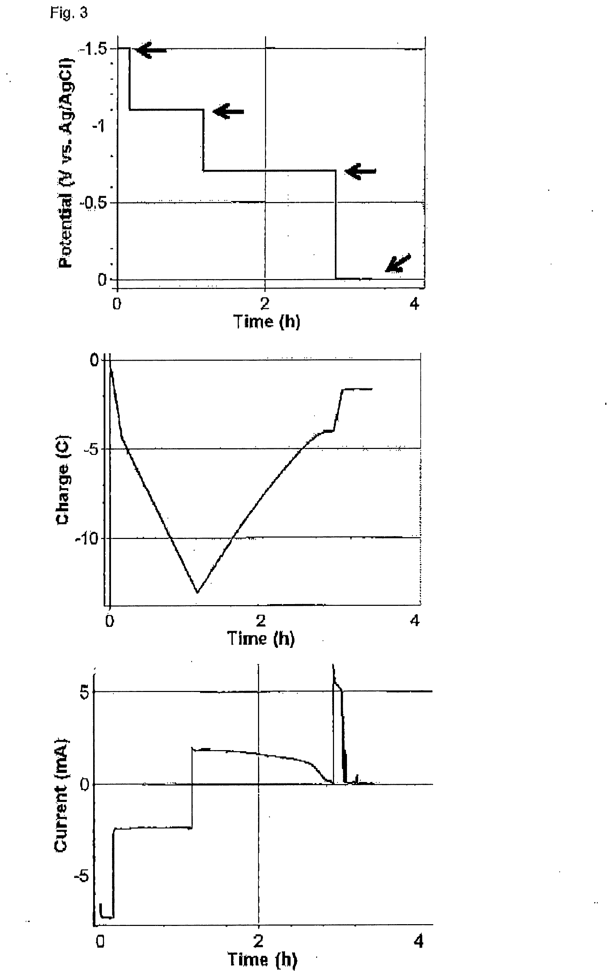

1. First a potential of -1.5 V vs. Ag/AgCl was applied for approx. 10 min to rapidly deposit Zn-In, which covers the carbon electrode and blocks carbon from creating $H_2$. That is, because Zn-In has a higher overpotential for $H_2$ evolution than carbon, the sooner the carbon is covered, the less $H_2$ is generated by passing current through the electrode.
2. Then a potential of -1.1 V is applied for ca 1 h to deposit much more Zn-In at lower overpotential. This represents only 0.1 V overpotential for Zn deposition.
3. The Zn-In is then oxidized (stripped) at -0.7 V for a long period of time, until the oxidation current greatly decreases. A somewhat high overpotential for stripping (0.3 V) is necessary because the Zn-In must be stripped off fast enough to decrease its available time to decompose to $H_2$.
4. Finally, Zn-In is stripped at 0 to -0.3 V for a short period of time to remove layers of In that protect Zn and prevent it from being stripped at -0.7 V. Though Zn and In co-deposit at the same potential, In requires higher potentials for stripping than Zn, as seen in the voltammograms according to Figure 3.

The voltages used in Steps 2 and 3 correspond to a voltage efficiency of 83%. The cell has an open-circuit voltage of ~2.2 V, so Step 2 corresponds to charging at 2.3 V and Step 3 discharging at 1.9 V.

**Comparison Zn-In vs Zn Half Cell**

Voltammetrie of 2 M $Zn(CH_3SO_3)_2$, 0.020 M $InCl_3$, 1 M $CH_3SO_3H$ (Zn-In) and 2 M $Zn(CH_3SO_3)_2$, 1 M $CH_3SO_3H$ (Zn), respectively. The results are shown in Figure 4.

Compared to Zn, Zn-In improves current efficiency from 60 to 90% when tested at identical voltage efficiencies using the potential program described above. Moreover, compared to Zn, Zn-In improves current efficiency from 83 to 93% and increases charging current density by 25% when tested at less efficient $E_{deposition}$ -1.5 V, $E_{stripping}$ 0 V (i.e. Charge 2.7 V, Discharge 1.2 V)

**Zn-In Device Testing in a Zn-In / Zn-In Redox Pump:**

Testing 2 M $Zn(CH_3SO_3)_2$, 0.020 M $InCl_3$, 1 M $CH_3SO_3H$ resulted in a 90% current efficiency in a device-level redox pump setup, in which Zn-In is deposited at a carbon electrode on one side and Zn is stripped from Zn plate 'on the other side as shown in Figure 5

**Zn-In / Cr-Ce Flow Battery Testing**

Testing a battery using 2 M $Zn(CH_3SO_3)_2$, 0.020 M $InCl_3$, 1 M $CH_3SO_3H$ as the fuel, 1.33 M $Cr(CH_3SO_3)_3$, 0.5 M $Ce(CH_3SO_3)_3$ as oxidant at voltages of 2,7 V for charging and 0.5 V for discharging respectively resulted in 86 % current efficiency as shown in Figure 6.

**Claims**

1. Rechargeable redox flow battery (RFB) comprising an electrochemical cell comprising at least a positive electrode in a positive half-cell and a negative electrode In a negative half-cell, an ion-conducting membrane between the two half-cells, wherein the membrane is designed for dual acidic anolyte and catholyte or designed for an acidic catholyte and an alkaline anolyte; at least two storage tanks for catholyte and anolyte, optionally one or more pumps to circulate stored catholyte and anolyte through the cathodic and anodic half cells, respectively, and at least one anolyte and at least one catholyte;

   wherein the anolyte comprises the $Zn^{2+}/Zn^0$ redox couple, methane sulfonic acid or its anion and at least one solvent;
   and
   the catholyte comprises the $Cr^{III}/Cr^{VI}$ redox couple, methane sulfonic acid or its anion, the $Ce^{4+}/Ce^{3+}$ redox couple and at least one solvent,
   wherein the anolyte contains $In^{3+}$ and/or the negative electrode contains $In^0$.

2. RFB according to Claim 1, wherein $Zn^{2+}/Zn^0$ is used in form of zinc (II) methane sulfonate, the $Cr^{III}/Cr^{VI}$ redox couple is used in form of chromium (III) methane sulfonate and $Ce^{3+}$ in the $Ce^{4+}/Ce^{3+}$ redox couple is used in form of cerium (III) methane sulfonate.

3. RFB according to Claim 1 or 2 wherein the solvent, is selected from the group consisting of water or a non-aqueous solvent, such as acetonitrile, dimethylsulfoxide, dimethylformamide, methanol, ethanol, 1-propanol, isopropanol, diethyl ether, diglyme, tetrahydrofuran, glycerol, and mixtures thereof.

4. RFB according to any of Claims 1 to 3 wherein the initial battery contains Zn in form of $Zn^0$ and Cr in form of $Cr_2O_7^{2-}$.

5. RFB according to any of Claims 1 to 3 wherein the initial battery contains Zn in form of $Zn^{2+}$ and Cr in form of $Cr^{3+}$, preferably in form of zinc (II) methane sulfonate and chromium (III) methane sulfonate.

6. RFB according to any of Claims 2 to 5 wherein the molar ratio of $Cr(CH_3SO_3)_3$ to $Ce(CH_3SO_3)_3$ in the anolyte is in the range from 1:1 to 5:1, particularly preferably from 2:1 to 3:1 and most preferably 2,7:1.

7. RFB according to Claim 1 wherein the molar amount of In with regard to Zn in the anolyte and anode is less than 50 mol%, preferably less than 15 mol% more preferably less than 5 mol% and most preferably not more than 1 mol%.

8. RFB according to any of Claims 2 to 6 which further comprises a $H_2$ recombinator.

9. Method for operating a RFB according to any of Claims 7 to 8 wherein the following potential program is applied to the negative half cell:

   a) a first potential of-1.5 (+/- 0.1) V vs. Ag/AgCl is applied for a shorter period than the following steps b) an c) to rapidly deposit Zn-In,
   b) a potential of-1.1 V (+/- 0.1V) Is applied to deposit more Zn-In,
   c) a potential of -0.7 V (+/- 0.1V) Is applied until the oxidation current greatly,
   d) a potential of 0 to -0.3 V Is applied for a shorter period than steps b) and c) to remove layers of In that protect Zn.

10. Use of the RFB according to any one of claims 1 to 8 to store electrical energy for grid-level energy storage, homeowner energy storage, remote locations, firming or load leveling of Intermittent renewable electricity generation site, preferably wind and solar farms, micro-hydropower, geothermal energy, tidal power, energy arbitrage, portable and/or personal electronics, electric vehicles such as ships, submarines, planes, unmanned underwater vehicles (UUVs) or unmanned aerial vehicles (UAVs), military electronics equipment, satellites and other manned or unmanned spacecraft, or other applications where rechargeable RFBs can be beneficially employed.

11. A method for storing electrical energy comprising:

a) charging the RFB according to any one of claims 1 to 8 by supplying a current power source to the positive and negative electrode,
b) discharging the RFB by connecting the positive and negative electrode to a load.

**Patentansprüche**

1. Wiederaufladbare Redox-Flow-Batterie (RFB) mit einer elektrochemischen Zelle, die mindestens eine positive Elektrode in einer positiven Halbzelle und eine negative Elektrode in einer negativen Halbzelle umfasst, einer ionenleitenden Membran zwischen den beiden Halbzellen, wobei die Membran für einen doppelten sauren Anolyten und Katholyten oder für einen sauren Katholyten und einen alkalischen Anolyten ausgelegt ist; mindestens zwei Lagertanks für den Katholyten und den Anolyten, optional eine oder mehrere Pumpen, um den gelagerten Katholyten und Anolyten jeweils durch die kathodische bzw. anodische Halbzelle zu zirkulieren, und mindestens einen Anolyten und mindestens einen Katholyten;

wobei der Anolyt das $Zn^{2+}/Zn^0$-Redoxpaar, Methansulfonsäure oder deren Anion und mindestens ein Lösungsmittel umfasst;
und
der Katholyt das Redoxpaar $Cr^{III}/Cr^{VI}$, Methansulfonsäure oder ihr Anion, das Redoxpaar $Ce^{4+}/Ce^{3+}$ und mindestens ein Lösungsmittel enthält,
wobei der Anolyt $In^{3+}$ enthält und/oder die negative Elektrode $In^0$ enthält.

2. RFB nach Anspruch 1, wobei $Zn^{2+}/Zn^0$ in Form von Zink(II)-Methansulfonat verwendet wird, das $Cr^{III}/Cr^{VI}$-Redoxpaar in Form von Chrom(III)-Methansulfonat und $Ce^{3+}$ im $Ce^{4+}/Ce^{3+}$-Redoxpaar in Form von Cer(III)-Methansulfonat verwendet wird.

3. RFB nach Anspruch 1 oder 2, wobei das Lösungsmittel ausgewählt ist aus der Gruppe, umfassend Wasser oder ein nichtwässriges Lösungsmittel, wie Acetonitril, Dimethylsulfoxid, Dimethylformamid, Methanol, Ethanol, 1-Propanol, Isopropanol, Diethylether, Diglyme, Tetrahydrofuran, Glycerin und Mischungen davon.

4. RFB nach einem der Ansprüche 1 bis 3, wobei die Ausgangsbatterie Zn in Form von $Zn^0$ und Cr in Form von $Cr_2O_7^{2-}$ enthält.

5. RFB nach einem der Ansprüche 1 bis 3, wobei die Ausgangsbatterie Zn in Form von $Zn^{2+}$ und Cr in Form von $Cr^{3+}$, vorzugsweise in Form von Zink(II)-Methansulfonat und Chrom(III)-Methansulfonat, enthält.

6. RFB nach einem der Ansprüche 2 bis 5, wobei das molare Verhältnis von $Cr(CH_3SO_3)_3$ zu $Ce(CH_3SO_3)_3$ im Anolyt im Bereich von 1:1 bis 5:1, besonders bevorzugt von 2:1 bis 3:1 und am meisten bevorzugt 2,7:1 liegt.

7. RFB nach Anspruch 1, wobei die molare Menge von In in Bezug auf Zn im Anolyt und in der Anode weniger als 50 Mol%, vorzugsweise weniger als 15 Mol%, noch bevorzugter weniger als 5 Mol% und am meisten bevorzugt nicht mehr als 1 Mol% beträgt.

8. RFB nach einem der Ansprüche 2 bis 6, die außerdem einen $H_2$-Rekombinator enthält.

9. Verfahren zum Betreiben einer RFB nach einem der Ansprüche 7 bis 8, wobei das folgende Potentialprogramm an die negative Halbzelle angelegt wird:

a) ein erstes Potenzial von -1,5 (+/- 0,1) V gegenüber Ag/AgCl wird für kürzeren Zeitraum als in den folgenden Schritten b) und c) angelegt, um Zn-In schnell abzuscheiden,
b) ein Potenzial von -1,1 V (+/- 0,1 V) wird angelegt, um mehr Zn-In abzuscheiden,
c) ein Potential von -0,7 V (+/- 0,1 V) angelegt, bis der Oxidationsstrom stark abnimmt,
d) ein Potenzial von 0 bis -0,3 V wird für einen kürzeren Zeitraum als in den Schritten b) und c) angelegt, um die In-Schichten zu entfernen, die das Zn schützen.

10. Verwendung der RFB nach einem der Ansprüche 1 bis 8 zur Speicherung elektrischer Energie für die Energiespeicherung auf Stromnetzebene, die Energiespeicherung für Hausbesitzer, abgelegene Standorte, zur Stabilisierung oder zum Lastausgleich von intermittierenden erneuerbaren Stromerzeugungsanlagen, vorzugsweise Wind- und Solarparks, Mikro-Wasserkraftwerken, geothermische Energie, Gezeitenkraftwerke, Energiearbitrage, tragbare und/oder persönliche elektronische Geräte, elektrische Fahrzeuge wie Schiffe, U-Boote, Flugzeuge, unbemannte Unterwasserfahrzeuge (UUVs) oder unbemannte Luftfahrzeuge (UAVs), militärische elektronische Ausrüstung, Satelliten und andere bemannte oder unbemannte Raumfahrzeuge oder andere Anwendungen, bei denen wiederaufladbare RFBs vorteilhaft eingesetzt werden können.

11. Verfahren zur Speicherung elektrischer Energie, umfassend:

a) Laden der RFB nach einem der Ansprüche 1 bis 8 durch Anlegen einer Stromquelle an die positive und negative Elektrode,
b) Entladen der RFB durch Anschluss der positiven und negativen Elektrode an eine Last.

**Revendications**

1. Batterie à reflux redox (RFB) rechargeable comprenant une cellule électrochimique comprenant au moins une électrode positive dans une demi-cellule positive et une électrode négative dans une demi-cellule négative, une membrane conductrice ionique entre les deux demi-cellules, en ce que la membrane est conçue pour un double anolyte et catholyte acides ou conçue pour un catholyte acide et un anolyte alcalin ; au moins deux réservoirs de stockage pour le catholyte et l'anolyte, éventuellement une ou plusieurs pompes pour faire circuler le catholyte et l'anolyte stockés à travers les demi-cellules cathodiques et anodiques et respectivement au moins un anolyte et au moins un catholyte ;

en ce que l'anolyte comprend le couple redox $Zn^{2+}/Zn^0$, de l'acide méthane sulfonique ou son anion et au moins un solvant ; et
le catholyte comprend le couple redox $Cr^{III}/Cr^{VI}$, de l'acide méthane sulfonique ou son anion, le couple redox $Ce^{4+}/Ce^{3+}$ et au moins un solvant,
en ce que l'anolyte contient le composé $In^{3+}$ et/ou l'électrode négative contient le composé $In^0$.

2. RFB selon la revendication 1, en ce que $Zn^{2+}/Zn^0$ est utilisé sous forme de méthanesulfonate de zinc (II), le couple redox $Cr^{III}/Cr^{VI}$ est utilisé sous forme de méthanesulfonate de chrome (III) et $Ce^{3+}$ dans le couple redox $Ce^{4+}/Ce^{3+}$ est utilisé sous forme de méthanesulfonate de cérium (III).

3. RFB selon la revendication 1 ou 2, en ce que le solvant est sélectionné dans le groupe constitué d'eau ou d'un solvant non aqueux, comme l'acétonitrile, le di-méthylsulfoxyde, le diméthylformamide, le méthanol, l'éthanol, le propan-1-ol, l'isopropanol, l'éther diéthylique, le diglyme, le tétrahydrofurane, le glycérol, et des mélanges de ceux-ci.

4. RFB selon l'une des revendications 1 à 3, en ce que la batterie initiale contient du Zn sous forme de $Zn^0$ et du Cr sous forme de $Cr_2O_7^{2-}$.

5. RFB selon l'une des revendications 1 à 3, en ce que la batterie initiale contient du Zn sous forme de $Zn^{2+}$ et du Cr sous forme de $Cr^{3+}$, de préférence sous forme de méthanesulfonate de zinc (II) et de méthanesulfonate de chrome (III).

6. RFB selon l'une des revendications 2 à 5, en ce que le rapport molaire de $Cr(CH_3SO_3)_3$ par rapport à $Ce(CH_3SO_3)_3$ dans l'anolyte est dans une plage comprise entre 1:1 et 5:1, en particulier de préférence entre 2:1 et 3:1 et le plus préférablement de 2,7:1.

7. RFB selon la revendication 1, en ce que la quantité molaire de In par rapport à Zn dans l'anolyte et l'anode est inférieure à 50 mol %, de préférence inférieure à 15 mol %, de manière plus préférentielle inférieure à 5 mol % et le plus préférablement pas plus de 1 mol %.

8. RFB selon l'une des revendications 2 à 6 qui comprend en outre un recombineur $H_2$.

9. Procédé de fonctionnement d'une RFB selon l'une des revendications 7 à 8, en ce que le programme potentiel suivant est appliqué à la demi-cellule négative :

a) un premier potentiel de -1,5 (+/-0,1) V vs Ag/AgC1 est appliqué pendant une période plus courte que les étapes b) et c) suivantes pour déposer rapidement du Zn-In,
b) un potentiel de -1,1 V (+/-0,1 V) est appliqué pour déposer plus de Zn-In,
c) un potentiel de -0,7 V (+/-0,1 V) est appliqué jusqu'à ce que le courant d'oxydation diminue considérablement,
d) un potentiel de 0 à -0,3 V est appliqué pendant une période plus courte qu'aux étapes b) et c) pour éliminer des couches de In qui protègent Zn.

10. Utilisation de la RFB selon l'une des revendications 1 à 8 pour stocker l'énergie électrique en vue d'un stockage d'énergie à niveau du réseau, le stockage d'énergie pour les propriétaires, les emplacements distants, la stabilisation ou équilibrage de la charge des sites de production d'électricité renouvelable intermittente, de préférence les parcs éoliens et solaires, les microcentrales hydroélectriques, l'énergie géothermique, l'énergie marémotrice, l'arbitrage énergétique, les appareils électroniques portables et/ou personnels, les véhicules électriques tels que navires, sous-marins, avions, véhicules sous-marins sans pilote (UUV) ou véhicules aériens sans pilote (UAV), les équipements électroniques militaires, les satellites et autres véhicules spatiaux habités ou non habités, ou autres applications où les RFB rechargeables peuvent être utilisées de manière avantageuse.

11. Procédé de stockage d'énergie électrique comprenant :

a) la charge de la RFB selon l'une des revendications 1 à 8 en fournissant une source d'alimentation électrique aux électrodes positive et négative,
b) la décharge de la RFB en connectant les électrodes positive et négative à une charge.

**Fig. 1:**

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016202950 A

### Non-patent literature cited in the description

- **BARD** ; **FAULKNER**. Electrochemical Methods: Fundamentals and Applications. 2001

- **WEBER, A.Z.** ; **MENCH, M.M.** ; **MEYERS, J.P. et al.** *J. Appl. Electrochem.*, 2011, vol. 41, 1137-1164